(19) Europäisches Patentamt / European Patent Office / Office européen des brevets

(11) **EP 2 515 404 A2**

(12) **EUROPÄISCHE PATENTANMELDUNG**

(43) Veröffentlichungstag:
    **24.10.2012 Patentblatt 2012/43**

(51) Int Cl.:
    **H02H 3/04** *(2006.01)* **G01R 31/28** *(2006.01)*

(21) Anmeldenummer: **12002571.3**

(22) Anmeldetag: **12.04.2012**

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**

(30) Priorität: **19.04.2011 DE 102011018229**

(71) Anmelder: **Diehl AKO Stiftung & Co. KG**
    **88239 Wangen (DE)**

(72) Erfinder:
    • **Pfeiffer, Georg**
      **88212 Ravensburg (DE)**
    • **Bichelmeier, Anton**
      **88099 Neukirch (DE)**
    • **Schill, Christoph**
      **88213 Ravensburg (DE)**

(74) Vertreter: **Diehl Patentabteilung**
    **c/o Diehl Stiftung & Co. KG**
    **Stephanstrasse 49**
    **90478 Nürnberg (DE)**

(54) **Schaltungsanordnung zur Potentialtrennung eines elektrischen Geräts vom Netz**

(57) Eine Schaltungsanordnung zur Potentialtrennung wenigstens eines elektrischen Geräts, insbesondere eines Wechselrichters einer Energieerzeugungsanlage wie beispielsweise einer Photovoltaikanlage, von einem Netz wie beispielsweise einem Stromversorgungsnetz weist wenigstens eine Leitung (L1; N) mit einem netzseitigen Anschluss (A1; A3) und einem geräteseitigen Anschluss (A2; A4) sowie eine Reihenschaltung aus wenigstens zwei steuerbaren Schaltelementen (S1, S2; S3, S4) zwischen dem netzseitigen Anschluss (A1; A3) und dem geräteseitigen Anschluss (A2; A4) in zumindest einer dieser wenigstens einen Leitung (L1; N) auf. Zum Prüfen der Funktionsfähigkeit dieser Potentialtrennungsschaltung ist ein Mittelkontakt (K1; K4) zwischen zwei Schaltelementen (S1, S2; S3, S4) einer Reihenschaltung im offenen Schaltzustand der beiden Schaltelemente (S1, S2; S3, S4) auf ein definiertes Potential ($U_{def}$) gesetzt und ist ferner wenigstens eine Messeinrichtung zum Erfassen eines Potentials oder einer Potentialverschiebung an diesem Mittelkontakt (K1; K4) zwischen den zwei Schaltelementen (S1, S2; S3, S4) der Reihenschaltung vorgesehen.

**Fig. 1**

EP 2 515 404 A2

## Beschreibung

Die vorliegende Erfindung betrifft eine Schaltungsanordnung zur Potentialtrennung wenigstens eines elektrischen Geräts von einem Netz sowie ein Verfahren zum Prüfen der Funktionsfähigkeit einer solchen Schaltungsanordnung.

Elektrische Geräte wie beispielsweise Wechselrichter von Energieerzeugungsanlagen (z.B. Photovoltaikanlagen) werden häufig über eine Schaltungsanordnung an ein Netz wie beispielsweise ein Stromversorgungsnetz angeschlossen, welche bei Bedarf eine Potentialtrennung des Geräts vom Netz ermöglicht. So müssen zum Beispiel Wechselrichter von Energieerzeugungsanlagen bei einem Netzausfall (z.B. Störung oder Freischaltung des Netzes) selbsttätig abgeschaltet oder vom Netz getrennt werden.

Gemäß der Norm IEC 62109-2 sind in diesem Zusammenhang für die selbsttätige Trennung eines Wechselrichters einer Photovoltaikanlage vom Stromversorgungsnetz in jeder Anschlussleitung zwei Trenneinrichtungen in Reihe erforderlich. Die durch diese Trenneinrichtungen bereitgestellte Potentialtrennung muss dabei geprüft werden können, bevor der Wechselrichter in Betrieb geht. Bei dieser Prüfung muss eine Fehlfunktion der Trenneinrichtungen, zum Beispiel in Form eines verklebten Kontaktes eines Schaltrelais, erkannt und gemeldet werden. Zur Durchführung dieser Prüfung ist es nicht erlaubt, eine noch funktionierende Trenneinrichtung zu schließen.

Es besteht somit Bedarf an einer Schaltungsanordnung zur Potentialtrennung eines Wechselrichters von einem Stromversorgungsnetz, welche eine Prüfung der Funktionsfähigkeit der Potentialtrennung, insbesondere der steuerbaren Schaltelemente der Schaltungsanordnung ermöglicht.

Der Erfindung liegt deshalb die Aufgabe zugrunde, eine verbesserte Schaltungsanordnung zur Potentialtrennung wenigstens eines elektrischen Geräts von einem Netz zu schaffen, welche eine Prüfung der Funktionsfähigkeit der Potentialtrennung ermöglicht.

Diese Aufgabe wird gelöst durch eine Schaltungsanordnung mit den Merkmalen des Anspruchs 1. Vorteilhafte Ausgestaltungen und Weiterbildungen der Erfindung sind Gegenstand der abhängigen Ansprüche.

Die Schaltungsanordnung zur Potentialtrennung wenigstens eines elektrischen Geräts von einem Netz weist wenigstens eine Leitung mit einem netzseitigen Anschluss und einem geräteseitigen Anschluss sowie in zumindest einer dieser wenigstens einen Leitung eine Reihenschaltung aus wenigstens zwei steuerbaren Schaltelementen zwischen dem netzseitigen Anschluss und dem geräteseitigen Anschluss auf. Erfindungsgemäß ist vorgesehen, dass ein Mittelkontakt zwischen zwei Schaltelementen einer Reihenschaltung im offenen Schaltzustand der beiden Schaltelemente ein definiertes Potential aufweist, und dass wenigstens eine Messeinrichtung zum Erfassen eines Potentials oder einer Potentialverschiebung an dem Mittelkontakt zwischen den zwei Schaltelementen der Reihenschaltung vorgesehen ist.

Gemäß der Erfindung wird ein Mittelkontakt zwischen zwei Schaltelementen einer Reihenschaltung in einer Anschlussleitung im offenen Schaltzustand der beiden Schaltelemente auf ein definiertes Potential gesetzt. Dieses definierte Potential am Mittelkontakt ermöglicht gegenüber dem herkömmlicherweise undefinierten Potential zwischen zwei offenen Schaltelementen eine (selbsttätige) Überprüfung von Veränderungen dieses Potentials zum Beispiel durch geschlossene Schaltelemente. Zu diesem Zweck ist wenigstens eine Messeinrichtung vorgesehen, welche das Potential oder eine Potentialverschiebung an diesem Mittelkontakt zwischen den zwei Schaltelementen der Reihenschaltung direkt oder indirekt erfassen kann. Aus einer so erfassten Potentialverschiebung oder einem so erfassten Potential, das nicht dem definierten Potential entspricht, kann auf einen Fehler in der Potentialtrennung der Schaltungsanordnung, zum Beispiel aufgrund eines verklebten Kontaktes eines Schaltelements, geschlossen werden.

Die Schaltungsanordnung der Erfindung zeichnet sich durch einen einfachen Aufbau mit einer geringen Anzahl zusätzlicher Bauelemente für die Potentialüberwachung sowie eine effektive und zuverlässige Überwachung der Funktionsfähigkeit der Potentialtrennung der Schaltungsanordnung aus. Auch können die steuerbaren Schaltelemente der Potentialtrennschaltung bzw. deren Kontakte mit der erfindungsgemäßen Schaltungsanordnung selbsttätig und mit passiven Maßnahmen überwacht werden.

Die erfindungsgemäße Schaltungsanordnung ist in vorteilhafter Weise für die Potentialtrennung eines Wechselrichters einer Energieerzeugungsanlage, beispielsweise einer Photovoltaikanlage, von einem Netz, beispielsweise einem Stromversorgungsnetz, einsetzbar, ohne dass die Erfindung auf diese Anwendung beschränkt sein soll. Die Erfindung ist dabei insbesondere auch bei einphasigen Wechselspannungsnetzen, bei mehrphasigen (insbesondere dreiphasigen) Wechselspannungsnetzen und bei Gleichspannungsnetzen anwendbar.

Die Verbesserte Schaltungsanordnung kann alle Schaltelemente überprüfen, ohne dass für die Überprüfung ein Schaltelement geschlossen werden muss. Es können damit alle Schaltelemente nicht nur auf geschlossen, sondern auch auf geöffnet überprüft werden.

Die "wenigstens eine Leitung" umfasst in diesem Zusammenhang eine Leitung, zwei Leitungen sowie drei und mehr Leitungen. Die gesamte Anschlussschaltung des elektrischen Geräts an das Netz kann je nach Anwendungsfall ausschließlich Leitungen mit Potentialtrennung oder auch Leitungen mit und Leitungen ohne Potentialtrennung enthalten. Im Fall eines Wechselspannungsnetzes handelt es sich bei den Leitungen zum Beispiel um einen Nullleiter und einen oder mehrere Phasenleiter.

Die netzseitigen und geräteseitigen "Anschlüsse" der Leitungen sollen in diesem Zusammenhang sowohl Anschlussklemmen zur lösbaren oder dauerhaften Verbindung als auch feste Anschlusspunkte zwischen der Leitung und dem Netz bzw. Gerät umfassen.

Unter dem Begriff der "steuerbaren Schaltelemente" sind in diesem Zusammenhang bevorzugt ein Relais oder ein Schütz, und besonders bevorzugt ein- und ausschaltbare (d.h. geschlossen und offen ansteuerbare) Halbleiterschaltelemente zu verstehen. Zu den geeigneten Halbleiterschaltelementen zählen vorzugsweise bipolare Leistungstransistoren, MOS-Feldeffekt-Leistungstransistoren, IGBTs (bipolare Leistungstransistoren mit integrierter MOSFET-Ansteuerung) und abschaltbare Thyristoren (zum Beispiel GTO-Thyristoren, SI-Thyristoren, F.C. Thyristoren).

Die "wenigstens zwei steuerbaren Schaltelemente" in zumindest einer Leitung (mit Möglichkeit zur Potentialtrennung) umfassen in diesem Zusammenhang eine Reihenschaltung aus zwei, drei oder mehr solchen Schaltelementen.

Der Begriff "Mittelkontakt" bezeichnet in diesem Zusammenhang eine beliebige Stelle der jeweiligen Leitung zwischen zwei Schaltelementen einer Reihenschaltung. Der Mittelkontakt muss insbesondere nicht der geometrischen Mittelposition zwischen den beiden Schaltelementen entsprechen.

Das "definierte Potential" bezeichnet ein grundsätzlich beliebiges, von Null bzw. Masse verschiedenes Potential mit einem definierten, d.h. vorgegebenen und damit bekannten Wert. Das definierte Potential stellt sich an dem jeweiligen Mittelkontakt zwischen zwei Schaltelementen einer Reihenschaltung ein, wenn beide Schaltelemente offen sind. Ist eines der beiden Schaltelemente geschlossen, zum Beispiel aufgrund eines verklebten Kontaktes, so stellt sich an dem Mittelkontakt ein von dem definierten Potential verschiedenes Potential ein, was durch die Messeinrichtung erfasst werden kann.

Die "wenigstens eine Messeinrichtung" umfasst in diesem Zusammenhang eine, zwei oder mehr Messeinrichtungen für jeden Mittelkontakt einer überwachten Leitung (mit Möglichkeit zur Potentialtrennung) und auch eine, zwei oder mehr kombinierte Messeinrichtungen für zwei oder mehr Mittelkontakte einer oder mehrerer Leitungen gemeinsam.

Unter einer "Messeinrichtung" soll in diesem Zusammenhang jede Art von Einrichtung verstanden werden, die in der Lage ist, ein Potential oder eine Potentialverschiebung (gegenüber dem definierten Potential) an dem jeweiligen Mittelkontakt in direkter oder indirekter Weise unmittelbar an dem Mittelkontakt oder an einer anderen Stelle zu erfassen. Die Messeinrichtung kann dabei auch mit einer Einrichtung zum Bestimmen des Potentials bzw. der Potentialverschiebung aus einem durch die Messeinrichtung erfassten Messwert enthalten.

Im Fall von mehr als zwei steuerbaren Schaltelementen in einer Leitung sind bevorzugt alle Mittelkontakte zwischen zwei Schaltelementen auf ein definiertes Potential (jeweils gleich oder unterschiedlich) gesetzt und mit einer Messeinrichtung gekoppelt. Auf diese Weise besteht die Möglichkeit, die Funktionsfähigkeit aller Schaltelemente zur Potentialtrennung in dieser Leitung zu überprüfen. Alternativ kann auch nur ein Mittelkontakt zwischen zwei Schaltelementen auf ein definiertes Potential gesetzt und mit einer Messeinrichtung gekoppelt sein, während der oder die anderen Mittelkontakte zwischen zwei Schaltelementen dieser Leitung nicht überwacht werden.

In einer vorteilhaften Ausgestaltung der Erfindung ist der Mittelkontakt über einen ersten Widerstand mit einem ersten Bezugspotential verbunden. Bei diesem ersten Bezugspotential handelt es sich vorzugsweise um ein Phasenleiter-Potential eines netzseitigen Anschlusses der Schaltungsanordnung.

In einer weiteren vorteilhaften Ausgestaltung der Erfindung ist der Mittelkontakt über einen zweiten Widerstand mit einem zweiten Bezugspotential verbunden. Bei diesem zweiten Bezugspotential handelt es sich vorzugsweise um ein Massepotential oder ein Nullleiter-Potential eines netzseitigen Anschlusses der Schaltungsanordnung.

In einer vorteilhaften Alternative ist der Widerstand ein ohmscher Widerstand, ein kapazitiver Widerstand oder ein gemischt ohmsch-kapazitiver Widerstand ist. Der erste und der zweite Widerstand werden vorzugsweise durch einen ohmschen Widerstand realisiert. Alternativ ist es aber auch denkbar, insbesondere im Fall eines Wechselspannungsnetzes, kapazitive Widerstände (Kondensatoren) oder Reihen- bzw. Parallelschaltungen von ohmschen und kapazitiven Widerständen zu verwenden. Die Art des Widerstands für den ersten Widerstand kann sich von der Art des Widerstands für den zweiten Widerstand unterscheiden.

Vorzugsweise ist das definierte Potential des Mittelkontaktes zwischen zwei Schaltelementen der Reihenschaltung im offenen Schaltzustand der beiden Schaltelemente durch das erste Bezugspotential und das zweite Bezugspotential sowie den ersten Widerstand und den zweiten Widerstand bestimmt. In einer bevorzugten Ausführungsform der Erfindung ist das erste Bezugspotential das Phasenleiter-Potential der jeweiligen Leitung, ist das zweite Bezugspotential das Nullleiter-Potential und sind der erste und der zweite Widerstand im Wesentlichen gleich groß gewählt, so dass das definierte Potential des Mittelkontaktes im Wesentlichen dem halben Phasenleiter-Potential entspricht.

In einer weiteren vorteilhaften Ausgestaltung der Erfindung ist mit dem geräteseitigen Potential des geräteseitigen Schaltelements ein drittes Bezugspotential über einen weiteren Widerstand und/oder über eine Kapazität verbunden.

Mit dieser Konfiguration lässt sich mittels der gleichen Messeinrichtung auch die Funktionsfähigkeit des geräteseitigen Schaltelementes prüfen. Bei dem dritten Bezugspotential handelt es sich vorzugsweise um ein Massepotential oder ein Nullleiter-Potential eines netzseitigen Anschlusses der Schaltungsanordnung.

Die Verbindung des geräteseitigen Potentials des geräteseitigen Schaltelements mit dem dritten Bezugspotential kann bevorzugt zwischen dem geräteseitigen Schaltelement und dem geräteseitigen Anschluss oder besonders vorteilhaft zwischen dem geräteseitigen Schaltelement und einem DC-Eingang des Geräts vorliegen. Die Kapazität kann beispielsweise durch einen oder mehrere Funkentstörkondensatoren gebildet sein, welche von verschiedenen Punkten des Geräts gegen Erde geschaltet sind. Bei einem Solarwechselrichter wäre es auch denkbar, dass die am Eingang des Wechselrichters angeschlossene Erdkapazität des Solargenerators genutzt wird.

In einer noch weiteren vorteilhaften Ausgestaltung der Erfindung ist wenigstens eine Messeinrichtung ausgebildet, um ein Messpotential an einer Verbindung des Mittelkontaktes zu einem Bezugspotential abzugreifen. Bei diesem Bezugspotential handelt es sich vorzugsweise um das Massepotential oder ein Nullleiter-Potential eines netzseitigen Anschlusses der Schaltungsanordnung.

Vorzugsweise sind das zweite Bezugspotential, das dritte Bezugspotential und das Bezugspotential der Messeinrichtung jeweils gleich gewählt, bevorzugt als das Massepotential oder ein Nullleiter-Potential eines netzseitigen Anschlusses der Schaltungsanordnung.

Typischerweise ist das elektrische Gerät mit dem Netz über wenigstens zwei Leitungen mit jeweils einem netzseitigen Anschluss und einem geräteseitigen Anschluss verbunden. In diesem Fall ist vorzugsweise für jede der wenigstens zwei Leitungen wenigstens eine Messeinrichtung zum Erfassen eines Potentials oder einer Potentialverschiebung an einem Mittelkontakt zwischen zwei Schaltelementen vorgesehen.

Die oben genannte Aufgabe wird darüber hinaus auch durch ein Verfahren mit den Merkmalen des Anspruches 9 gelöst.

Bei dem erfindungsgemäßen Verfahren zum Prüfen der Funktionsfähigkeit einer Schaltungsanordnung zur Potentialtrennung wenigstens eines elektrischen Geräts von einem Netz, wobei die Schaltungsanordnung wenigstens eine Leitung mit einem netzseitigen Anschluss und einem geräteseitigen Anschluss sowie eine Reihenschaltung aus wenigstens zwei steuerbaren Schaltelementen zwischen dem netzseitigen Anschluss und dem geräteseitigen Anschluss in zumindest einer dieser wenigstens einen Leitung aufweist, wird ein Mittelkontakt zwischen zwei Schaltelementen einer Reihenschaltung im offenen Schaltzustand der beiden Schaltelemente auf ein definiertes Potential gesetzt. Dann wird ein Potential oder eine Potentialverschiebung an dem Mittelkontakt zwischen den zwei Schaltelementen der Reihenschaltung bei einer offenen Ansteuerung aller Schaltelemente erfasst, um aus dem erfassten Potential bzw. der erfassten Potentialverschiebung zu bestimmen, ob eines der Schaltelemente trotz offener Ansteuerung geschlossen ist.

In besonders vorteilhafter Weise kann auf dieselbe Weise auch geprüft werden, ob nach Schließen des jeweiligen Schaltkontakts dieser tatsächlich geschlossen hat.

Die Vorteile, Anwendungsmöglichkeiten und Begriffsdefinitionen dieses Verfahrens entsprechen jenen, die oben in Zusammenhang mit der erfindungsgemäßen Schaltungsanordnung erläutert worden sind.

Vorzugsweise wird zur Durchführung dieses Verfahrens eine oben beschriebene Schaltungsanordnung der Erfindung verwendet.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:

Fig. 1    ein vereinfachtes Blockschaltbild einer Schaltungsanordnung zur Potentialtrennung gemäß einem ersten Ausführungsbeispiel der vorliegenden Erfindung; und

Fig. 2    ein vereinfachtes Blockschaltbild eines Teils einer Schaltungsanordnung zur Potentialtrennung gemäß einem zweiten Ausführungsbeispiel der vorliegenden Erfindung.

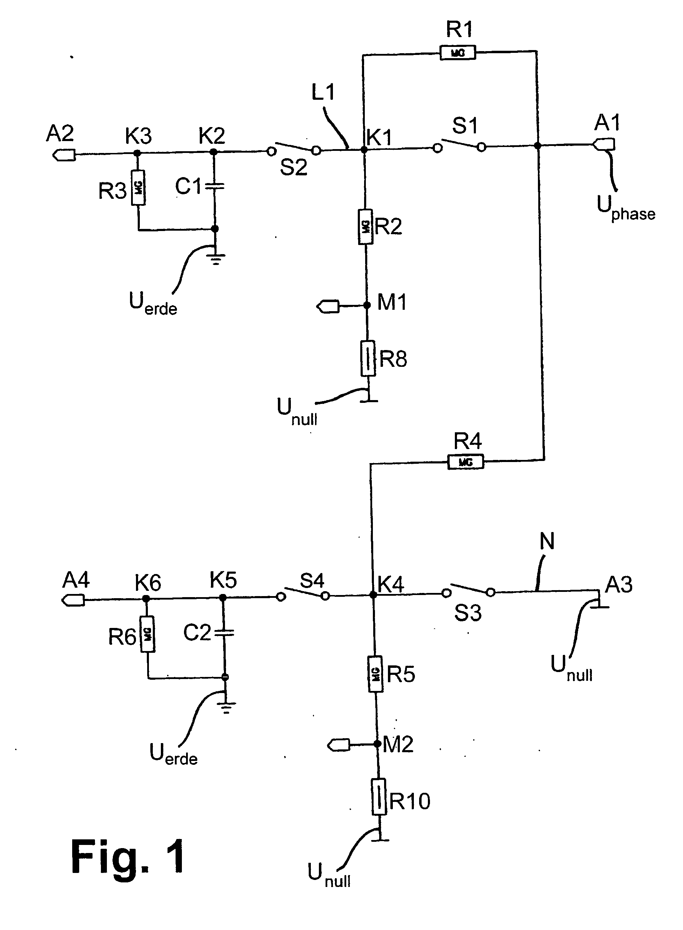

Anhand von Fig. 1 wird zunächst ein erstes Ausführungsbeispiel einer Schaltungsanordnung zur Potentialtrennung am Beispiel eines an ein Stromversorgungsnetz angeschlossenen Wechselrichters einer Photovoltaikanlage beschrieben.

Der Wechselrichter (nicht dargestellt) ist über einen Phasenleiter L1 und einen Nullleiter N an das Stromversorgungsnetz (nicht dargestellt) angeschlossen. Der Phasenleiter L1 hat einen netzseitigen Anschluss A1 und einen geräteseitigen Anschluss A2. In ähnlicher Weise hat der Nullleiter N einen netzseitigen Anschluss A3 und einen geräteseitigen Anschluss A4. Der netzseitige Anschluss A1 des Phasenleiters L1 liegt auf dem Phasenleiter-Potential $U_{phase}$ und der netzseitige Anschluss A3 des Nullleiters N liegt auf dem Nullleiter-Potential $U_{null}$, welches in einigen Fällen gleich dem Massepotential $U_{erde}$ ist.

Zur Potentialtrennung des Wechselrichters von dem Stromversorgungsnetz ist in dem Phasenleiter L1 eine Reihenschaltung aus einem ersten steuerbaren Schaltelement S1 und einem zweiten steuerbaren Schaltelement S2 vorgesehen. In ähnlicher Weise ist im Nullleiter eine Reihenschaltung aus einem dritten steuerbaren Schaltelement S3 und einem vierten steuerbaren Schaltelement S4 vorgesehen. Als steuerbare Schaltelemente S1..S4 werden vorzugsweise Relais oder Schütze eingesetzt. Alternativ oder zusätzlich können Halbleiterschaltelemente wie bipolare Leistungstransistoren, MOS-Feldeffekt-Leistungstransistoren, IGBTs und dergleichen eingesetzt werden.

Im normalen Einspeisebetrieb des Wechselrichters werden alle vier Schaltelemente S1..S4 von einer Steuereinrichtung (nicht dargestellt) geschlossen angesteuert. Soll eine Potentialtrennung des Wechselrichters vom Stromversorgungsnetz bewirkt werden, zum Beispiel in einem Störfall des Netzes, so werden alle vier Schaltelemente S1..S4 von der Steuereinrichtung offen angesteuert.

Um zu gewährleisten, dass eine derartige Potentialtrennung des Wechselrichters vom Netz bei Bedarf möglich ist, muss die Potentialtrennschaltung auf ihre Funktionsfähigkeit überprüft werden, bevor der Wechselrichter in Betrieb geht. Die bestmögliche Sicherheit wird erreicht, wenn bei dieser Funktionsprüfung keines der vier Schaltelemente S1..S4 geschlossen werden muss. Außerdem muss die Möglichkeit bestehen, jedes der vier Schaltelemente S1..S4 auf seine Funktionsfähigkeit hin zu prüfen.

Zu diesem Zweck ist ein Mittelkontakt K1 zwischen dem ersten und dem zweiten Schaltelement S1, S2 im Phasenleiter L1 über einen hochohmigen ersten Widerstand R1 mit dem netzseitigen Anschluss A1 des Phasenleiters L1 und damit mit dem Phasenleiter-Potential $U_{phase}$ als erstem Bezugspotential verbunden. Mit anderen Worten wird das netzseitige Schaltelement S1 des Phasenleiters L1 über den ersten Widerstand R1 überbrückt. Ferner ist dieser Mittelkontakt K1 über einen hochohmigen zweiten Widerstand R2 und einen niederohmigen weiteren Widerstand R8 mit dem Nullleiter-Potential $U_{null}$ als zweitem Bezugspotential verbunden.

Auf diese Weise liegt der Mittelkontakt K1 auch bei offenen Schaltelementen S1 und S2 auf einem definierten Potential

$$U_{def,L1} = U_{phase} \cdot \frac{R_2 + R_8}{R_1 + R_2 + R_8} \qquad \ldots(1)$$

Vorzugsweise sind der erste Widerstand R1 und der zweite Widerstand R2 im Wesentlichen gleich groß gewählt. Diese hochohmigen Widerstände R1 und R2 liegen bevorzugt im einstelligen Megaohm-Bereich (d.h. 1 M$\Omega$ ≤ R1, R2 ≤ 10 M$\Omega$), während der niederohmige Widerstand R8 bevorzugt im niedrigen Kiloohm-Bereich liegt (d.h. 0,5 k$\Omega$ ≤ R8 ≤ 50 k$\Omega$). Die genauen Werte wird der Fachmann problemlos anhand der zu erwartenden Potentiale und der Empfindlichkeit der Messeinrichtung bestimmen. Bei dieser Ausführungsform liegt der Mittelkontakt K1 zwischen den beiden Schaltelementen S1, S2 im offenen Schaltzustand der beiden Schaltelemente dann etwa auf dem halben Phasenleiter-Potential als definiertem Potential $U_{def,L1}$:

$$U_{def,L1} \cong 1/2 \cdot U_{phase} \qquad \ldots(2)$$

Optimaler Weise wird $U_{phase}$ separat gemessen, um den Betrag des halben Phasenleiter-Potential zu bestimmen. Hilfweise könnte $U_{phase}$ auch als Nennspannung angenommen werden und nach anschließender Schließung des Kontaktes verifiziert werden.

Ferner ist ein zweiter Kontaktpunkt K2 zwischen dem geräteseitigen zweiten Schaltelement S2 und dem geräteseitigen Anschluss A2 des Phasenleiters L1 über eine Kapazität C1 mit dem Massepotential $U_{erde}$ verbunden und ist ein dritter Kontaktpunkt K3 zwischen dem geräteseitigen zweiten Schaltelement S2 und dem geräteseitigen Anschluss A2 des Phasenleiters L1 über einen hochohmigen weiteren Widerstand R3 mit dem Massepotential $U_{erde}$ verbunden. Wahlweise besteht auch die Möglichkeit, auf die Kapazität C1 oder den weiteren Widerstand R3 zu verzichten. Für die Kapazität C1 kann beispielsweise ein Entstörkondensator benutzt werden, welcher in vielen Schaltungsanordnungen ohnehin vorhanden ist.

Alternativ ist die Verbindung des geräteseitigen Potentials des geräteseitigen Schaltelements S1, S4 mit einem dritten Bezugspotential $U_{erde}$ über einen weiteren Widerstand R3, R6 und/oder über eine Kapazität C1, C2 zwischen dem geräteseitigen Schaltelements S1, S4 und dem DC-Eingang des Wechselrichters angeordnet. Diese Verbindung kann im Wechselrichter angeordnet sein.

Wie in Fig. 1 dargestellt, ist der zweite Widerstand R2 über einen niederohmigen Widerstand R8 mit den Nullleiter-Potential $U_{null}$ verbunden. An einem Mittelabgriff M1 zwischen den beiden Widerständen R2 und R8 greift eine Messeinrichtung (nicht dargestellt) das dort vorliegende Potential ab. Das von der Messeinrichtung erfasste Potential gibt Aufschluss über das Potential am Mittelkontakt K1 bzw. eine Verschiebung dieses Potentials gegenüber dem definierten Potential $U_{def,L1}$.

Bei einer offenen Ansteuerung des ersten Schaltelements S1 und des zweiten Schaltelements S2 kann die Messeinrichtung je nach Funktionsfähigkeit der Schaltungsanordnung (fehlerfrei, fehlerhaft) unterschiedliche Messwerte erfassen.

In diesem Ausführungsbeispiel erfasst die Messeinrichtung im Fall einer fehlerfreien Schaltungsanordnung, d.h. bei tatsächlich offenen Schaltelementen S1 und S2, am Mittelabgriff M1 eine Messspannung

$$U_{mess,M1} = U_{phase} \cdot \frac{R_8}{R_1 + R_2 + R_8} \qquad \ldots (3)$$

Im Fall eines fehlerhaften geschlossenen ersten Schaltelements S1 (z.B. aufgrund eines verklebten Kontaktes) liegt am Mittelkontakt K1 das Phasenleiter-Potential $U_{phase}$ an. Die Messeinrichtung erfasst dann am Mittelabgriff M1 eine erhöhte Messspannung

$$U_{mess,M1} = U_{phase} \cdot \frac{R_8}{R_2 + R_8} \qquad \ldots (4)$$

Im Fall eines fehlerhaften geschlossenen zweiten Schaltelements S2 (z.B. aufgrund eines verklebten Kontaktes) liegt am Mittelkontakt K1 hingegen ein Potential kleiner als das halbe Phasenleiter-Potential '/z $U_{phase}$ an. Die Messeinrichtung erfasst dann am Mittelabgriff M1 eine verringerte Messspannung.

Es gilt:

$$U_{mess,\ M1} < 1/2\ U_{Phase} \qquad \ldots (5)$$

Neben der Überwachung der Funktionsfähigkeit der beiden Schaltelemente S1 und S2 im Phasenleiter L1 sollen auch die beiden Schaltelemente S3 und S4 im Nullleiter N überwacht werden können. Zu diesem Zweck ist die Schaltungsanordnung im Bereich des Nullleiters N in ähnlicher Weise wie im Bereich des Phasenleiters L1 aufgebaut.

Ein Mittelkontakt K4 zwischen dem dritten Schaltelement S3 und dem vierten Schaltelement S4 im Nullleiter N ist über einen hochohmigen ersten Widerstand R4 mit dem netzseitigen Anschluss A1 des Phasenleiters L1 und damit wie der obige Mittelkontakt K1 ebenfalls mit dem Phasenleiter-Potential $U_{phase}$ als erstem Bezugspotential verbunden. Ferner ist dieser Mittelkontakt K4 über einen hochohmigen zweiten Widerstand R5 und eine niederohmigen weiteren Widerstand R10 mit dem Nullleiter-Potential $U_{null}$ als zweitem Bezugspotential verbunden.

Auf diese Weise liegt der Mittelkontakt K4 auch bei offenen Schaltelementen S3 und S4 im Nullleiter N auf einem definierten Potential

$$U_{def,N} = U_{phase} \cdot \frac{R_5 + R_{10}}{R_4 + R_5 + R_{10}} \qquad \ldots (6)$$

Vorzugsweise sind der erste Widerstand R4 und der zweite Widerstand R5 auch in diesem Fall im Wesentlichen gleich groß gewählt. Diese hochohmigen Widerstände R4 und R5 liegen bevorzugt im einstelligen Megaohm-Bereich (d.h. 1 MΩ ≤ R1, R2 ≤ 10 MΩ), während der niederohmige Widerstand R10 bevorzugt im niedrigen Kiloohm-Bereich liegt (d.h. 0,5 kΩ ≤ R8 ≤ 50 kΩ). Bei dieser Ausführungsform liegt der Mittelkontakt K4 zwischen den beiden Schaltelementen S3, S4 im offenen Schaltzustand dieser beiden Schaltelemente deshalb etwa auf dem halben Phasenleiter-Potential als definiertem Potential $U_{def,N}$ (d.h. $U_{def,N} \approx \frac{1}{2} U_{phase}$).

Ferner ist ein zweiter Kontaktpunkt K5 zwischen dem geräteseitigen vierten Schaltelement S4 und dem geräteseitigen Anschluss A4 des Nullleiters N über eine Kapazität C2 mit dem Massepotential $U_{erde}$ verbunden und ist ein dritter Kontaktpunkt K6 zwischen dem geräteseitigen vierten Schaltelement S4 und dem geräteseitigen Anschluss A4 des Nullleiters N über einen hochohmigen weiteren Widerstand R6 mit dem Massepotential $U_{erde}$ verbunden. Wahlweise besteht auch die Möglichkeit, auf die Kapazität C2 oder den weiteren Widerstand R6 zu verzichten. Auch für diese Kapazität C2 kann beispielsweise ein Entstörkondensator benutzt werden, welcher in vielen Schaltungsanordnungen ohnehin vorhanden ist. Die obige Beschreibung zum zweiten Kontaktpunkt K2 gilt analog.

Wie in Fig. 1 dargestellt, greift an einem Mittelabgriff M2 zwischen den beiden Widerständen R5 und R10 eine Messeinrichtung (nicht dargestellt) das dort vorliegende Potential ab. Das von der Messeinrichtung erfasste Potential gibt Aufschluss über das Potential am Mittelkontakt K4 bzw. eine Verschiebung dieses Potentials gegenüber dem definierten Potential $U_{def,N}$.

Bei einer offenen Ansteuerung des dritten Schaltelements S3 und des vierten Schaltelements S4 erfasst die Messeinrichtung je nach Funktionsfähigkeit der Schaltungsanordnung (fehlerfrei, fehlerhaft) unterschiedliche Messwerte.

In diesem Ausführungsbeispiel erfasst die Messeinrichtung im Fall einer fehlerfreien Schaltungsanordnung, d.h. bei tatsächlich offenen Schaltelementen S3 und S3, am Mittelabgriff M2 eine Messspannung

$$U_{mess,M2} = U_{phase} \cdot \frac{R_{10}}{R_4 + R_5 + R_{10}} \qquad \ldots(7)$$

Im Fall eines fehlerhaften geschlossenen dritten Schaltelements S3 (z.B. aufgrund eines verklebten Kontaktes) liegt am Mittelkontakt K4 das Nullleiter-Potential $U_{null}$ an. Die Messeinrichtung erfasst dann am Mittelabgriff M2 eine Messspannung

$$U_{mess,M2} = U_{null} = 0 \qquad \ldots(8)$$

Im Fall eines fehlerhaften geschlossenen vierten Schaltelements S4 (z.B. aufgrund eines verklebten Kontaktes) liegt am Mittelkontakt K4 hingegen ein Potential kleiner als das halbe Phasenleiter-Potential ½$U_{phase}$ an. Die Messeinrichtung erfasst dann am Mittelabgriff M2 eine verringerte Messspannung.

Es gilt:

$$0 < U_{mess,M2} < 1/2\ U_{Phase} \qquad \ldots(9)$$

Die Schaltelemente S3 und S4 des Nullleiters N bzw. deren Kontakte können somit durch die Anhebung des Potentials am Mittelkontakt K4 zwischen diesen beiden Schaltelementen in Richtung Phasenleiter-Potential $U_{phase}$ ausgewertet werden.

Mit der oben beschriebenen Schaltungsanordnung kann auf eine fehlerhafte Potentialtrennschaltung geschlossen werden, falls das gemessene Potential von dem bei einer funktionsfähigen Potentialtrennschaltung zu erwartenden Potential abweicht. Kann mit der jeweiligen Messeinrichtung nicht nur ein Vergleich durchgeführt, sondern auch der absolute Potentialmesswert erfasst werden, so ist es auch möglich, genau zu bestimmen, welches der steuerbaren Schaltelemente der Schaltungsanordnung defekt ist.

Selbstverständlich kann auch durch gezieltes Schließen einzelner Schaltelemente und Auswertung der Potenzialmesswerte geprüft werden, ob diese tatsächlich schließen. Dazu ist vorher sicherzustellen, dass das jeweils in Serie liegende Schaltelement geöffnet ist.

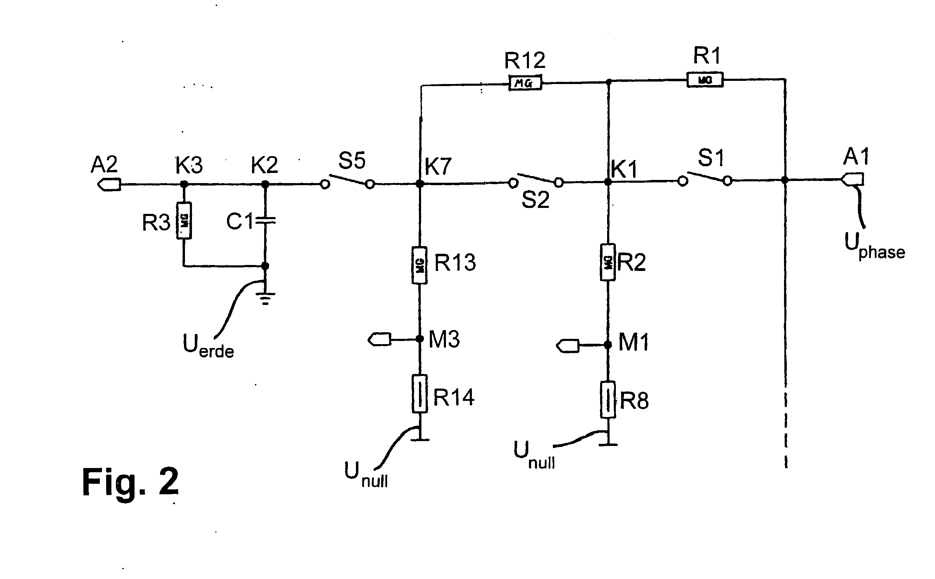

Anhand von Fig. 2 wird nun ein zweites Ausführungsbeispiel einer Schaltungsanordnung zur Potentialtrennung am Beispiel eines an ein Stromversorgungsnetz angeschlossenen Wechselrichters einer Photovoltaikanlage beschrieben.

In Fig. 2 sind gleiche bzw. entsprechende Komponenten der Schaltungsanordnung mit den gleichen Zeichen wie in der oben beschriebenen Fig. 1 gekennzeichnet. Zur Vereinfachung ist in dem Blockschaltbild von Fig. 2 allerdings nur der Teil des Phasenleiters L1 dargestellt, während die Darstellung des Schaltungsteils des Nullleiters N weggelassen worden ist.

Die Schaltungsanordnung von Fig. 2 unterscheidet sich von dem oben beschriebenen ersten Ausführungsbeispiel dadurch, dass im Phasenleiter L1 eine Reihenschaltung aus insgesamt drei steuerbaren Schaltelementen S1, S2 und S5 angeordnet ist.

Um die Funktionsfähigkeit auch des dritten Schaltelements S5 überprüfen zu können, sind sowohl der Mittelkontakt K1 zwischen dem ersten und dem zweiten Schaltelement S1, S2 als auch der Mittelkontakt K7 zwischen dem zweiten und dem dritten Schaltelement S2, S5 auf ein definiertes Potential angehoben. Außerdem können die Potentiale oder Potentialverschiebungen an diesen beiden Mittelkontakten K1 und K7 mittels einer ersten Messeinrichtung über einen Mittelabgriff M1 bzw. einer zweiten Messeinrichtung über einen Mittelabgriff M3 erfasst und ausgewertet werden.

Genauer ist der Mittelkontakt K1 zwischen dem ersten und dem zweiten Schaltelement S1, S2 im Phasenleiter L1 wie im ersten Ausführungsbeispiel über einen hochohmigen ersten Widerstand R1 mit dem netzseitigen Anschluss A1 des Phasenleiters L1 und damit mit dem Phasenleiter-Potential $U_{phase}$ als erstem Bezugspotential verbunden. Ferner ist dieser Mittelkontakt K1 wie im ersten Ausführungsbeispiel über einen hochohmigen zweiten Widerstand R2 und einen niederohmigen weiteren Widerstand R8 mit dem Nullleiter-Potential $U_{null}$ als zweitem Bezugspotential verbunden.

Ferner sind wie im ersten Ausführungsbeispiel ein zweiter Kontaktpunkt K2 und ein dritter Kontaktpunkt K3 zwischen dem geräteseitigen dritten Schaltelement S5 und dem geräteseitigen Anschluss A2 des Phasenleiters L1 über eine Kapazität C1 bzw. einen weiteren hochohmigen Widerstand R3 mit dem Massepotential $U_{erde}$ verbunden verbunden. Wahlweise besteht auch hier die Möglichkeit, auf die Kapazität C1 oder den weiteren Widerstand R3 zu verzichten. Für die Kapazität C1 kann beispielsweise ein Entstörkondensator benutzt werden, welcher in vielen Schaltungsanordnungen ohnehin vorhanden ist. Die im ersten Ausführungsbeispiel dargelegte Alternative gilt für das zweite Ausführungsbeispiel analog.

Zusätzlich ist der Mittelkontakt K7 zwischen dem zweiten Schaltelement S2 und dem dritten Schaltelement S5 im Phasenleiter L1 über den ersten Widerstand R1 und einen hochohmigen dritten Widerstand R12 mit dem netzseitigen Anschluss A1 des Phasenleiters L1 und damit mit dem Phasenleiter-Potential $U_{phase}$ als Bezugspotential verbunden. Ferner ist dieser Mittelkontakt K7 analog zum anderen Mittelkontakt K1 über einen hochohmigen vierten Widerstand R13 und einen niederohmigen weiteren Widerstand R14 mit dem Nullleiter-Potential $U_{null}$ als Bezugspotential verbunden.

Beispielsweise ist der erste Widerstand R1 gleichgroß wie der dritte Widerstand R12 und der vierte Widerstand R13 und halb so groß wie der zweite Widerstand R2 gewählt. Dann stellt sich bei offenen Schaltelementen S1, S2 und S5 am Mittelkontakt K1 ein Potenzial von ungefähr dem halben Phasenleiterpotenzial und am Mittelkontakt K7 ein Potenzial von ungefähr einem Viertel des Phasenleiterpotenzials ein.

Wie in Fig. 2 dargestellt, greift eine Messeinrichtung an einem Mittelabgriff M1 zwischen den beiden Widerständen R2 und R8 das dort vorliegende Potential ab, welches Aufschluss über das Potential am Mittelkontakt K1 bzw. eine Verschiebung dieses Potentials gegenüber dem dort definierten Potential gibt. In entsprechender Weise greift eine weitere Messeinrichtung an einem Mittelabgriff M3 zwischen den beiden Widerständen R13 und R14 das dort vorliegende Potential ab, welches Aufschluss über das Potential am Mittelkontakt K7 bzw. eine Verschiebung dieses Potentials gegenüber dem dort definierten Potential gibt.

Bei einer offenen Ansteuerung aller Schaltelemente S1, S2, S5 in der Phaseneinleitung erfassen die beiden Messeinrichtung je nach Funktionsfähigkeit der Schaltungsanordnung unterschiedliche Messwerte.

Die möglichen auftretenden Messwerte $U_{mess,M1}$ und $U_{mess,M3}$ wird der Fachmann anhand der obigen Ausführungen in Zusammenhang mit dem ersten Ausführungsbeispiel von Fig. 1 und anhand des Blockschaltbildes von Fig. 2 ohne weiteres erkennen können.

Neben der Phasenleitung L1 kann natürlich auch die Nullleitung N der Schaltungsanordnung mit einer Reihenschaltung aus drei oder mehr steuerbaren Schaltelementen und entsprechenden Maßnahmen zur Überprüfung deren Funktionsfähigkeit ausgebildet sein.

**Patentansprüche**

1. Schaltungsanordnung zur Potentialtrennung wenigstens eines elektrischen Geräts, insbesondere eines Wechselrichters einer Energieerzeugungsanlage, von einem Netz, mit

   wenigstens einer Leitung (L1; N) mit einem netzseitigen Anschluss (A1; A3) und einem geräteseitigen Anschluss (A2; A4); und

   einer Reihenschaltung aus wenigstens zwei steuerbaren Schaltelementen (S1, S2; S3, S4) zwischen dem netzseitigen Anschluss (A1; A3) und dem geräteseitigen Anschluss (A2; A4) in zumindest einer dieser wenigstens einen Leitung (L1; N),

   **dadurch gekennzeichnet, dass**

   ein Mittelkontakt (K1; K4) zwischen zwei Schaltelementen (S1, S2; S3, S4) einer Reihenschaltung im offenen Schaltzustand der beiden Schaltelemente (S1, S2; S3, S4) ein definiertes Potential ($U_{def}$) aufweist; und

   wenigstens eine Messeinrichtung zum Erfassen eines Potentials oder einer Potentialverschiebung an dem Mittelkontakt (K1; K4) zwischen den zwei Schaltelementen (S1, S2; S3, S4) der Reihenschaltung vorgesehen ist.

2. Schaltungsanordnung nach Anspruch 1,

**dadurch gekennzeichnet, dass**
der Mittelkontakt (K1; K4) über einen ersten Widerstand (R1; R4) mit einem ersten Bezugspotential verbunden ist.

3. Schaltungsanordnung nach Anspruch 1 oder 2,
   **dadurch gekennzeichnet, dass**
   der Mittelkontakt (K1; K4) über einen zweiten Widerstand (R2; R5) mit einem zweiten Bezugspotential verbunden ist.

4. Schaltungsanordnung nach Anspruch 2 oder 3,
   **dadurch gekennzeichnet, dass**
   der Widerstand (R1, R4; R2, R5) ein ohmscher Widerstand, ein kapazitiver Widerstand oder ein gemischt ohmsch-kapazitiver Widerstand ist.

5. Schaltungsanordnung nach einem der vorhergehenden Ansprüche,
   **dadurch gekennzeichnet, dass**
   mit dem geräteseitigen Potential des geräteseitigen Schaltelements (S1; S4) ein drittes Bezugspotential ($U_{erde}$) über einen weiteren Widerstand (R3; R6) und/oder über eine Kapazität (C1; C2) verbunden ist.

6. Schaltungsanordnung nach einem der vorhergehenden Ansprüche,
   **dadurch gekennzeichnet, dass**
   wenigstens eine Messeinrichtung ausgebildet ist, ein Messpotential ($U_{mess}$) an einer Verbindung des Mittelkontaktes (K1; K4) zu einem Bezugspotential abzugreifen.

7. Schaltungsanordnung nach einem der Ansprüche 2 bis 6,
   **dadurch gekennzeichnet, dass**
   das erste Bezugspotential ein Phasenleiter-Potential ($U_{phase}$) eines netzseitigen Anschlusses (A1) ist.

8. Schaltungsanordnung nach einem der Ansprüche 3 bis 7,
   **dadurch gekennzeichnet, dass**
   das zweite Bezugspotential, das dritte Bezugspotential und/oder das Bezugspotential der Messeinrichtung ein Massepotential ($U_{erde}$) oder ein Nullleiter-Potential ($U_{null}$) eines netzseitigen Anschlusses (A3) sind.

9. Schaltungsanordnung nach einem der vorhergehenden Ansprüche,
   **dadurch gekennzeichnet, dass**
   wenigstens zwei Leitungen (L1; N) mit jeweils einem netzseitigen Anschluss (A1; A3) und einem geräteseitigen Anschluss (A2; A4) vorgesehen sind; und
   für jede der wenigstens zwei Leitungen (L1; N) wenigstens eine Messeinrichtung zum Erfassen eines Potentials oder einer Potentialverschiebung an einem Mittelkontakt (K1; K4) zwischen zwei Schaltelementen (S1, S2; S3, S4) vorgesehen ist.

10. Verfahren zum Prüfen der Funktionsfähigkeit einer Schaltungsanordnung zur Potentialtrennung wenigstens eines elektrischen Geräts von einem Netz, wobei die Schaltungsanordnung wenigstens eine Leitung (L1; N) mit einem netzseitigen Anschluss (A1; A3) und einem geräteseitigen Anschluss (A2; A4) und eine Reihenschaltung aus wenigstens zwei steuerbaren Schaltelementen (S1, S2; S3, S4) zwischen dem netzseitigen Anschluss (A1; A3) und dem geräteseitigen Anschluss (A2; A4) in zumindest einer dieser wenigstens einen Leitung (L1; N) aufweist,
    **dadurch gekennzeichnet, dass**
    ein Mittelkontakt (K1; K4) zwischen zwei Schaltelementen (S1, S2; S3, S4) einer Reihenschaltung im offenen Schaltzustand der beiden Schaltelemente (S1, S2; S3, S4) auf ein definiertes Potential ($U_{def}$) gesetzt wird;
    ein Potential oder eine Potentialverschiebung an dem Mittelkontakt (K1; K4) zwischen den zwei Schaltelementen (S1, S2; S3, S4) der Reihenschaltung bei einer offenen Ansteuerung aller Schaltelemente erfasst wird; und
    aus dem erfassten Potential oder der erfassten Potentialverschiebung bestimmt wird, ob eines der Schaltelemente (S1, S2; S3, S4) trotz offener Ansteuerung geschlossen ist.

11. Verfahren nach Anspruch 10,
    **dadurch gekennzeichnet, dass**
    zur Durchführung des Verfahrens eine Schaltungsanordnung nach einem der Ansprüche 1 bis 9 verwendet wird.

**Fig. 1**

Fig. 2

EP 2 515 404 A2